# FASCICULE DE BREVET EUROPEEN

(11) **EP 3 661 805 B1**
(45) Date de publication et mention de la délivrance du brevet: **30.08.2023**
(21) Numéro de dépôt: 18752571.2
(22) Date de dépôt: 09.07.2018
(51) Int. Cl.: B60N 2/90, B60N 2/56, B60N 2/70

(54) **GARNITURE DE SIEGE MULTIFONCTION POUR VEHICULE AUTOMOBILE**
MULTIFUNKTIONS-SITZBEZUG FÜR KRAFTFAHRZEUGE
MULTIFUNCTION SEAT TRIM FOR MOTOR VEHICLE

(30) Priorité: 01.08.2017 FR 1757367
(43) Date de publication de la demande: 10.06.2020
(73) Titulaire: PSA Automobiles SA, 78300 Poissy (FR)
(72) Inventeur: VOITOT, Jean, 25250 Onans (FR); OUACHEE, Hervé, 25250 Appenans (FR); COMBEAU, Frederic, 25750 Desandans (FR); MARTIN, Philippe, 25200 Montbeliard (FR); DAVID, Eric, 92290 Chatenay Malabry (FR); THIEL, Marc, 25400 EXINCOURT (FR)
(86) Numéro de dépôt international: PCT/FR2018/051722
(87) Numéro de publication internationale: WO 2019/025682

(56) Documents cités:
- JP-U- H01 144 019
- US-A1- 2003 186 642
- US-A1- 2005 264 086
- US-A1- 2006 087 160

## Description

L'invention concerne, de façon générale, les sièges destinés plus particulièrement aux véhicules automobiles. L'invention porte plus précisément sur une matelassure de siège de véhicule, configurée pour permettre l'intégration d'une pluralité de fonctions.

De manière connue, un siège de véhicule permet à la fois au conducteur de se positionner correctement à son poste de conduite et d'assurer le confort de tous les occupants du véhicule.

En effet, un siège automobile comprend une superposition d'éléments permettant d'assurer à la fois la rigidité du siège, la fixation d'un tel siège à l'habitacle du véhicule et le confort des passagers. A ce titre, de manière connue, un siège de véhicule comprend une armature composée de pièces généralement métalliques, définissant la structure rigide du siège et permettant sa liaison avec l'habitacle du véhicule. Des nappes de suspension, composées de fils d'acier à ressorts et fixées à l'armature du siège, permettent l'apposition d'une garniture assurant la souplesse de l'assise et du dossier du siège. Une telle garniture, communément désignée « matelassure », est généralement recouverte d'une coiffe, composée de fibres de tissu formant le revêtement du siège.

Selon l'état de la technique, la matelassure d'un siège de véhicule automobile constituant le rembourrage du siège permet l'intégration de différentes fonctions.

En effet, afin d'augmenter le confort des passagers, les sièges de véhicule incluent de nos jours de plus en plus de fonctions telles que des fonctions de massage ou de chauffage par exemple. A ce titre, le document FR 2938167 décrit un siège pour véhicule automobile intégrant une fonction de massage. Un tel siège comprend une nappe de support, configurée pour soutenir la matelassure ainsi qu'un système assurant le massage du dos de l'occupant du siège. Le siège décrit dans le document FR 2938167 permet également l'intégration d'une fonction supplémentaire, en incluant par exemple une fonction de chauffage dans la coiffe du siège. Le document US 2006/087160 divulgue également un siège de véhicule avec fonction de chauffage et d'adaptation du soutien lombaire.

D'autres dispositifs de confort, tels que des dispositifs de ventilation, sont de nos jours également régulièrement ajoutés à un siège de véhicule. Aussi le document DE 102013014039 décrit un siège pour véhicule automobile configuré pour intégrer à la fois une fonction de massage et une fonction de ventilation. A ce titre, un tel siège intègre un ventilateur et une coiffe en fibres de tissu, perméable à l'air. Des orifices sont ajoutés à la matelassure et/ou à la coiffe de manière à permettre une meilleure ventilation du siège. Cependant, un tel siège ne permet pas une ventilation optimale de l'occupant du siège. En effet, la matelassure décrite dans le document DE 102013014039 n'est pas perforée de manière à optimiser la diffusion de l'air sur le corps de l'occupant. Aussi, l'air ventilé dans le dossier du siège peut être projeté par exemple vers les oreilles de l'occupant, générant une gêne. De même, l'air provenant de l'assise peut être diffusé vers les parties intimes de l'occupant, ce qui peut être une gêne pour l'occupant.

L'invention vise donc à pallier au moins en partie ces inconvénients en proposant une garniture pour siège de véhicule simple et ergonomique permettant l'intégration d'une pluralité de fonctions dans le siège du véhicule. Une telle garniture permet également de limiter la gêne due à la projection d'un flux d'air sur une zone non souhaitée de l'occupant du siège.

Plus précisément, pour parvenir à ce résultat, la présente invention concerne un siège de véhicule, notamment de véhicule automobile, comprenant une garniture de siège de véhicule, ledit siège comprenant un dossier et une assise et intégrant un dispositif de massage et un dispositif de ventilation, ledit dispositif de ventilation étant configuré pour générer un flux d'air, ladite garniture comprenant une première matelassure dudit dossier et une deuxième matelassure de ladite assise, ladite première matelassure comprenant une partie inférieure et une partie supérieure, ladite deuxième matelassure comprenant une portion centrale et une portion périphérique, ladite garniture étant remarquable en ce que :
- ladite première matelassure comprend une première pluralité d'orifices, configurée pour permettre la fixation dudit dispositif de massage, une deuxième pluralité d'orifices sur ladite partie supérieure et une troisième pluralité d'orifices sur ladite partie inférieure, ladite deuxième pluralité d'orifices et ladite troisième pluralité d'orifices étant configurées pour permettre la circulation dudit flux d'air généré par le dispositif de ventilation, lesdits orifices de ladite troisième pluralité d'orifices présentant une surface d'ouverture strictement supérieure à la surface d'ouverture desdits orifices de la deuxième pluralité d'orifices, et
- ladite deuxième matelassure comprend une quatrième pluralité d'orifices, positionnée uniquement au niveau de la portion périphérique de l'assise du siège.

Une telle garniture de siège permet avantageusement l'intégration simultanée d'une pluralité de fonctions de confort audit siège du véhicule.

De manière avantageuse, ledit dispositif de massage comprenant des éléments de massage, ladite première matelassure comprend une cinquième pluralité d'orifices, configurée pour permettre le passage desdits éléments de massage.

De manière préférée, ladite partie inférieure de la première matelassure présente une épaisseur supérieure à l'épaisseur de ladite partie supérieure de la première matelassure, permettant un meilleur maintien du dos, en particulier des lombaires, de l'occupant du siège.

Avantageusement, ladite partie supérieure de la première matelassure présente une épaisseur supérieure ou égale à 40 mm.

De préférence, ladite partie inférieure de la première matelassure comprenant une portion basse, ladite portion basse de la partie inférieure de la première matelassure présente une épaisseur supérieure ou égale à 60 mm.

Selon une forme de réalisation préférée de l'invention, ladite deuxième matelassure présente une épaisseur supérieure ou égale à 75 mm, assurant une assise confortable à l'occupant du siège.

De manière avantageuse, le dispositif de ventilation générant un débit prédéterminé d'air, la deuxième pluralité d'orifices, la troisième pluralité d'orifices et la quatrième pluralité d'orifices présentant une surface d'ouverture globale, ladite surface d'ouverture globale est configurée pour permettre le passage de l'intégralité dudit débit d'air prédéterminé.

Avantageusement, la garniture comprend une mousse expansée fabriquée au moyen d'un moule, ladite mousse expansée présentant un plan de jointure situé à mi-épaisseur de la garniture, permettant au plan de jointure, inesthétique, de ne pas être visible au travers de la coiffe. Le plan de jointure à mi-épaisseur permet également de ne pas créer de surépaisseur locale sur le dossier ou l'assise du siège, potentiellement source de gêne pour l'occupant.

L'invention concerne également un siège de véhicule, notamment de véhicule automobile, comprenant une garniture telle que décrite précédemment.

L'invention concerne enfin un véhicule automobile comprenant un siège tel que décrit ci-dessus.

D'autres caractéristiques et avantages de l'invention apparaîtront à la lecture de la description détaillée des formes de réalisation de l'invention, données à titre d'exemple uniquement, et en référence aux dessins qui montrent :
- la figure 1, une représentation schématique d'un véhicule automobile et du repère de définition d'un tel véhicule,
- la figure 2, une représentation schématique des différentes parties d'un siège de véhicule automobile,
- la figure 3, une vue en coupe d'un siège de véhicule comprenant une garniture selon l'invention,
- la figure 4, une représentation schématique d'une première matelassure d'un dossier de siège de véhicule selon une forme de réalisation de l'invention,
- la figure 5, une représentation schématique d'une deuxième matelassure d'une assise de siège de véhicule selon une forme de réalisation de l'invention,
- la figure 6, une représentation schématique de la pluralité d'orifices de garniture de siège selon une forme de réalisation préférée de l'invention.

Dans ce qui va suivre, les formes de réalisation décrites s'attachent plus particulièrement à une installation de la garniture selon l'invention sur un siège de véhicule automobile. Cependant, toute installation dans un contexte différent, en particulier dans tout type de véhicule, est également visée par la présente invention.

Selon une forme de réalisation préférée de l'invention, un véhicule 1 automobile comprend un siège 10 intégrant un dispositif de massage 20 et un dispositif de ventilation 30, cependant il va de soi que le siège 10 pourrait également intégrer d'autres dispositifs de confort, tel qu'un dispositif de chauffage par exemple.

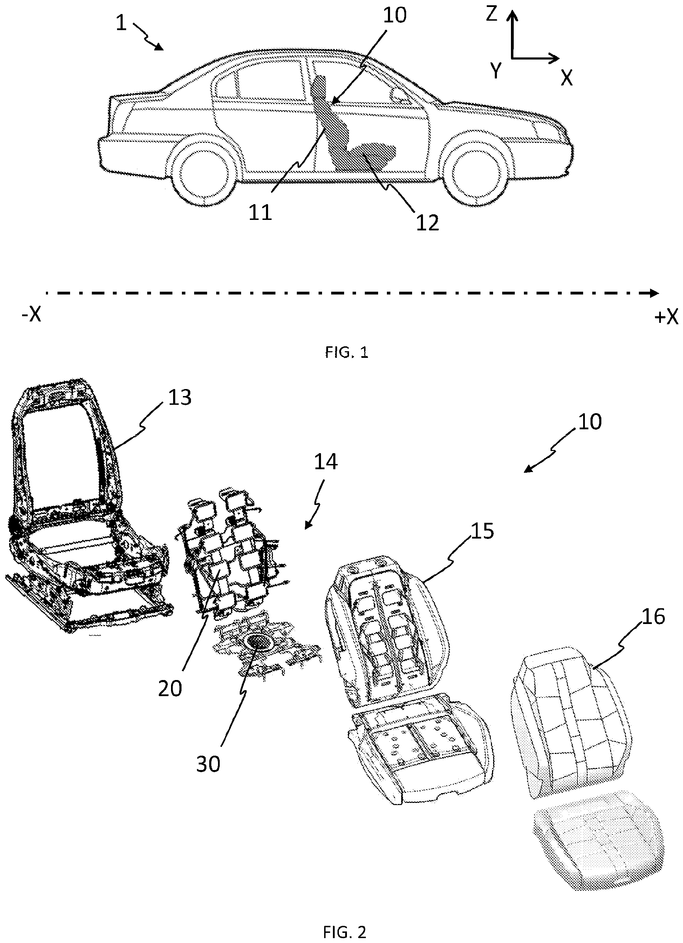

En référence à la figure 1, le véhicule 1 automobile s'étend longitudinalement selon un axe X, latéralement selon un axe Y et verticalement selon un axe Z, de manière à former un repère orthogonal (X, Y, Z). Ainsi par le terme « horizontal » on décrit un objet s'étendant dans le plan (X, Y) et par le terme « vertical », un objet s'étendant dans le plan (Y, Z). De plus, l'avant du véhicule est défini en référence à la direction +X de l'axe longitudinal du véhicule et l'arrière du véhicule à la direction -X.

Chaque siège 10 monté dans le véhicule 1 comprend un dossier 11, configuré pour recevoir le dos d'un occupant et une assise 12, sur laquelle s'assied l'occupant. En référence à la figure 2, le siège 10 du véhicule 1 comprend une armature 13, une nappe de suspension 14, une garniture 15 de siège 10, désignée matelassure, et une coiffe 16.

L'armature 13 du siège 10 comprend de préférence une pluralité de pièces métalliques, définissant la structure rigide du siège 10. Une telle armature 13 permet en outre la fixation du siège 10 à l'intérieur du véhicule 1. Comme cela est connu, une telle armature 13 comprend une première partie sensiblement horizontale, correspondant à la structure de l'assise 12 du siège 10 et une seconde partie, correspondant à la structure du dossier 11 du siège 10. La structure de l'assise 12 et la structure du dossier 11 sont configurées pour pivoter l'une par rapport à l'autre de manière à permettre l'inclinaison du dossier 11 par rapport à l'assise 12.

Une nappe de suspension 14 est fixée sur chaque structure de l'armature 13 (une nappe de suspension 14 sur la structure de l'assise 12 et une nappe de suspension 14 sur la structure du dossier 11). Chaque nappe de suspension 14, fixée à l'armature 13 du siège 10, comprend une pluralité de fils d'acier à ressorts assurant la souplesse du siège 10. Dans cet exemple, la nappe de suspension 14 du dossier 11 intègre le dispositif de massage 20. De même la nappe de suspension 14 de l'assise 12 intègre un dispositif de ventilation 30.

La coiffe 16 correspond à la housse de revêtement du siège 10 sur laquelle l'occupant est installé. Une telle coiffe 16, réalisée en tissu ou en cuir par exemple est ainsi configurée pour recouvrir la garniture 15 du siège 10.

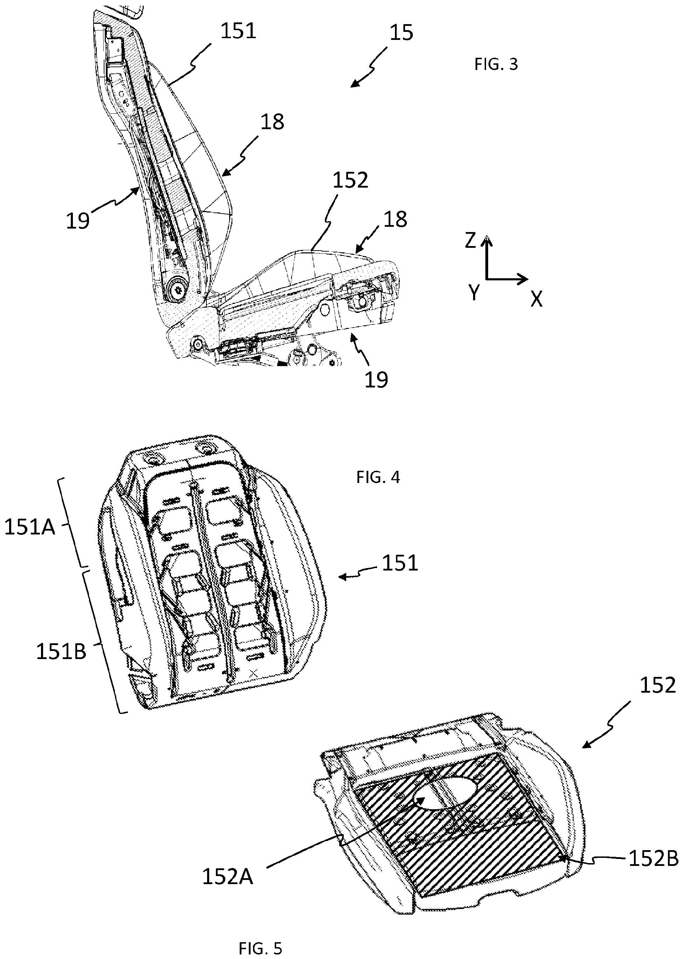

Selon une forme de réalisation de l'invention, en référence à la figure 3, la garniture 15 du dossier 11 présente une face avant, orientée vers l'avant du véhicule 1, c'est-à-dire selon la direction +X du repère orthogonal (X, Y, Z), et désignée « face visible » 18 et une face arrière, orientée vers l'arrière du véhicule 1, c'est-à-dire selon la direction -X du repère orthogonal (X, Y, Z), et désignée « face technique » 19.

La garniture 15 du siège 10, est réalisée de préférence en mousse expansive. Une telle mousse expansive, également désignée « mousse polyuréthane » est une mousse qui par une réaction chimique de polymérisation transforme le polyuréthane liquide en une mousse rigide. Pour cela un moule est rempli de polyuréthane liquide qui en séchant gonfle jusqu'à prendre la forme intérieure du moule et se solidifie. Un tel moule, d'épaisseurs prédéterminées de manière à obtenir une garniture 15 de siège 10 à des dimensions prédéfinies, comprend deux parties, fixées solidairement l'une à l'autre, permettant la formation d'un volume interne fermé. La jonction entre les deux parties du moule définie une jointure de la mousse expansive. Selon une forme de réalisation préférée, une telle jointure se trouve en tout point de la mousse, à mi-épaisseur du moule, permettant avantageusement de limiter la visibilité d'une telle jointure.

La garniture 15 de siège 10 comprend une première matelassure 151 du dossier 11 et une deuxième matelassure 152 de l'assise 12.

En référence à la figure 4, ladite première matelassure 151 comprend une partie supérieure 151A, correspondant à la portion du dossier 11 sur laquelle ne repose le dos d'un occupant que lorsque celui-ci est de grande taille et une partie inférieure 151B, correspondant à la portion du dossier 11 sur laquelle le dos d'un occupant est systématiquement positionné. A titre d'exemple, dans le cas d'un dossier 11 de siège 10 de 640 mm de hauteur, la partie inférieure 151B aura une hauteur comprise entre 370 et 400 mm, de préférence 400 mm. Autrement dit, la partie inférieure 151B du dossier 11 représente de préférence environ 60 % de la hauteur totale du dossier 11.

Dans cet exemple, la partie supérieure 151A de la première matelassure 151 présente une épaisseur supérieure ou égale à 40 mm, de manière à assurer un bon confort du siège 10. De même la partie inférieure 151B comprenant une portion basse correspondant à la zone d'appui des lombaires de l'occupant, une telle portion basse présente une épaisseur plus importante par exemple supérieure ou égale à 60 mm.

En référence à la figure 5, la deuxième matelassure 152 comprend une portion centrale 152A et une portion périphérique 152B, correspondant à la portion hachurée. Chacune de ces deux portions seront décrites plus en détails par la suite.

Selon une forme préférée de réalisation de l'invention, une telle garniture 15 de siège 10 est configurée pour permettre une installation et une utilisation optimale de l'ensemble des dispositifs de confort connus installés dans un véhicule 1 automobile, à savoir dans cet exemple, un dispositif de massage 20 et un dispositif de ventilation 30.

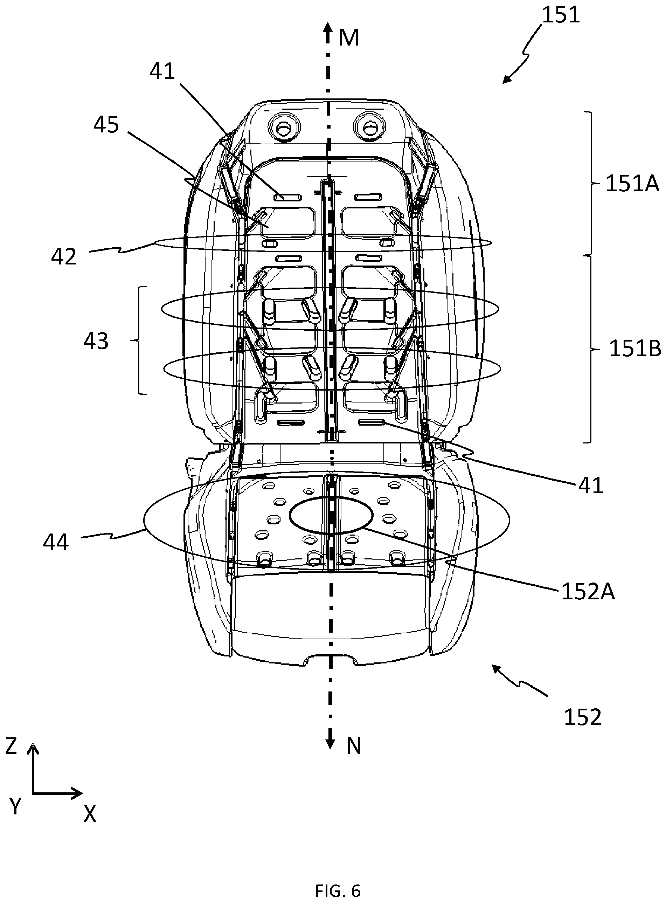

A ce titre, comme représenté sur la figure 6, la première matelassure 151 comprend une première pluralité d'orifices 41 permettant le passage de sangles du dispositif de massage 20 dans le but d'assurer sa fixation. Les orifices de ladite première pluralité d'orifices 41, traversant la première matelassure 151 suivant l'axe Y du repère orthogonal (X, Y, Z), sont de préférence de forme oblongue horizontale, de manière à permettre le passage d'une sangle de tissu plate. Le dispositif de massage 20 étant monté sur la nappe de suspension 14, comme décrit précédemment, les orifices de la première pluralité d'orifices 41, par exemple au nombre de 6 afin d'assurer une meilleure fixation, sont de préférence répartis symétriquement de part et d'autre d'un axe médian vertical M de la première matelassure 151.

La première matelassure 151 comprend en outre une deuxième pluralité d'orifices 42 sur la partie supérieure 151A de la première matelassure 151 et une troisième pluralité d'orifice 43 sur la partie inférieure 151B de la première matelassure 151. La deuxième pluralité d'orifices 42 et la troisième pluralité d'orifices 43 sont configurées pour permettre la circulation du flux d'air généré par le dispositif de ventilation 30. De telles deuxième pluralité d'orifices 42 et troisième pluralité d'orifices 43 sont par exemple de formes circulaires ou oblongues et sont réparties symétriquement par rapport à l'axe médian vertical M, de manière à permettre une répartition équitable dans tout le siège 10 du flux d'air généré par le dispositif de ventilation 30.

De manière préférée, les orifices de la troisième pluralité d'orifices 43 présentent une surface d'ouverture supérieure à la surface d'ouverture des orifices de la deuxième pluralité d'orifices 42. Autrement dit dans l'exemple d'orifices circulaires, les orifices de la troisième pluralité d'orifices 43 présentent un diamètre supérieur au diamètre des orifices de la deuxième pluralité d'orifices 42. Une telle différence de surface d'ouverture permet la projection d'un débit de flux d'air plus important au bas du dos de l'occupant. Dans le cas d'un occupant de petite taille, celui-ci n'est ainsi pas gêné par un flux d'air important dans le cou ou proche des oreilles par exemple.

Le nombre d'orifices de la deuxième pluralité d'orifices 42 est dans cet exemple de l'ordre de 2 orifices, De même la troisième pluralité d'orifices 43 comprend par exemple 8 orifices, assurant une répartition homogène de l'air dans l'ensemble du dossier 11 du siège 10. La dimension des orifices de la deuxième pluralité d'orifices 42 et de la troisième pluralité d'orifices 43 dépend du débit d'air généré par le dispositif de ventilation 30 nécessaire pour rafraîchir l'occupant du siège 10.

Comme décrit précédemment, la deuxième matelassure 152 comprend une portion centrale 152A et une portion périphérique 152B. En position assise, un occupant est en contact du siège 10 au niveau de ses fesses et de ses cuisses. La portion centrale 152A délimite la surface au-dessus de laquelle se trouvent les parties intimes de l'occupant. La portion périphérique 152B correspond à l'ensemble de l'assise 12 ôtée de la portion centrale 152A, comme représenté sur la zone hachurée sur la figure 5. Dans cet exemple non limitatif, la portion centrale 152A est située à 200 mm de l'arrière de l'assise 12 et à 165 mm des bordures latérales de l'assise 12.

La deuxième matelassure 152 comprend ainsi une quatrième pluralité d'orifices 44, positionnée uniquement au niveau de la portion périphérique 152B de l'assise 12 du siège 10, de manière à limiter la projection d'air au niveau des parties intimes de l'occupant. Les orifices d'une telle quatrième pluralité d'orifices 44, par exemple au nombre de 16, sont répartis symétriquement de part et d'autre d'un axe médian horizontal N de manière à répartir équitablement le flux d'air dans l'assise 12 du siège 10.

L'ensemble des orifices de la deuxième pluralité d'orifices 42, de la troisième pluralité d'orifices 43 et de la quatrième pluralité d'orifices 44 est configuré pour assurer le passage de l'intégralité du flux d'air généré par le dispositif de ventilation 30. Autrement dit la surface d'ouverture globale de l'ensemble des orifices de la deuxième pluralité d'orifices 42, de la troisième pluralité d'orifices 43 et de la quatrième pluralité d'orifices 44 permet le passage du flux d'air complet, quel que soit le débit du dispositif de ventilation 30.

Selon une forme de réalisation préférée de l'invention, le dispositif de massage 20 comprenant une pluralité d'éléments de massage, tels que des boules de massage par exemple, la première matelassure 151 comprend en outre une cinquième pluralité d'orifices 45, configurée pour permettre le passage des éléments de massage du dispositif de massage 20.

Une telle garniture 15 de siège 10 selon l'invention permet avantageusement d'intégrer à la fois un dispositif de massage 20 et un dispositif de ventilation 30, permettant ainsi de faciliter l'intégration et l'association de tels dispositifs de confort au sein d'un véhicule 1 automobile. L'air du flux d'air généré par le dispositif de ventilation 30 peut également aisément circuler entre la face technique 19 et la face visible 18 de la garniture 15 de siège 10. Enfin la garniture 15 selon l'invention permet avantageusement de réduire les temps de montage des dispositifs de confort sur un siège 10 de véhicule 1.

## Revendications

1. Siège (10) de véhicule, notamment de véhicule (1) automobile, comprenant une garniture (15) , ledit siège (10) comprenant un dossier (11) et une assise (12) et intégrant un dispositif de massage (20) et un dispositif de ventilation (30), ledit dispositif de ventilation (30) étant configuré pour générer un flux d'air, ladite garniture (15) comprenant une première matelassure (151) dudit dossier (11) et une deuxième matelassure (152) de ladite assise (12), ladite première matelassure (151) comprenant une partie inférieure (151B) et une partie supérieure (151A), ladite deuxième matelassure (152) comprenant une portion centrale (152A) et une portion périphérique (152B), le siège (10) étant **caractérisé en ce que** :
- ladite première matelassure (151) comprend une première pluralité d'orifices (41), configurée pour permettre la fixation dudit dispositif de massage (20), une deuxième pluralité d'orifices (42) sur ladite partie supérieure (151A) et une troisième pluralité d'orifices (43) sur ladite partie inférieure (151B), ladite deuxième pluralité d'orifices (42) et ladite troisième pluralité d'orifices (43) étant configurées pour permettre la circulation dudit flux d'air généré par le dispositif de ventilation (30), lesdits orifices de ladite troisième pluralité d'orifices (43) présentant une surface d'ouverture strictement supérieure à la surface d'ouverture desdits orifices de la deuxième pluralité d'orifices (42), et
- ladite deuxième matelassure (152) comprend une quatrième pluralité d'orifices (44), positionnée uniquement au niveau de la portion périphérique (152B) de l'assise (12) du siège (10).

2. Siège (10) selon la revendication précédente, dans lequel, ledit dispositif de massage (20) comprenant des éléments de massage, ladite première matelassure (151) comprend une cinquième pluralité d'orifices (45), configurée pour permettre le passage desdits éléments de massage.

3. Siège (10) selon l'une des revendications précédentes, dans lequel ladite partie inférieure (151B) de la première matelassure (151) présente une épaisseur supérieure à l'épaisseur de ladite partie supérieure (151A) de la première matelassure (151).

4. Siège (10) selon l'une des revendications précédentes, dans lequel ladite partie supérieure (151A) de la première matelassure (151) présente une épaisseur supérieure ou égale à 40 mm.

5. Siège (10) selon l'une des revendications précédentes, dans lequel ladite partie inférieure (151B) de la première matelassure (151) comprenant une portion basse, ladite portion basse de la partie inférieure (151B) de la première matelassure (151) présente une épaisseur supérieure ou égale à 60 mm.

6. Siège (10) selon l'une des revendications précédentes, dans lequel ladite deuxième matelassure (152) présente une épaisseur supérieure ou égale à 75 mm.

7. Siège (10) selon l'une des revendications précédentes, dans lequel, le dispositif de ventilation (30) générant un débit prédéterminé d'air, la deuxième pluralité d'orifices (42), la troisième pluralité d'orifices (43) et la quatrième pluralité d'orifices (44) présentant une surface d'ouverture globale, ladite surface d'ouverture globale est configurée pour permettre le passage de l'intégralité dudit débit d'air prédéterminé.

8. Siège (10) selon l'une des revendications précédentes, dont la garniture (15) comprend une mousse expansée fabriquée au moyen d'un moule, ladite mousse expansée présentant un plan de jointure situé à mi-épaisseur de la garniture (15).

9. Véhicule (1) automobile comprenant un siège (10) selon l'une des revendications de 1 à 8.

## Patentansprüche

1. Sitz (10) für ein Fahrzeug, insbesondere für ein Kraftfahrzeug (1), mit einer Dichtung (15), wobei der Sitz (10) eine Rückenlehne (11) und ein Sitzteil (12) umfasst und eine Massagevorrichtung (20) und eine Belüftungsvorrichtung (30) umfasst, wobei die Belüftungsvorrichtung (30) so konfiguriert ist, dass sie einen Luftstrom erzeugt, wobei die Dichtung (15) eine erste Polsterung (151) der Rückenlehne (11) und eine zweite Polsterung (152) des Sitzteils (12) umfasst, wobei die erste Polsterung (151), umfassend einen unteren Abschnitt (151B) und einen oberen Abschnitt (151A), wobei die zweite Matratze (152) einen mittleren Abschnitt (152A) und einen Umfangsabschnitt (152B) umfasst, wobei der Sitz (10) **dadurch gekennzeichnet ist, dass**:
- die erste Matratze (151) umfasst eine erste Vielzahl von Öffnungen (41), die so konfiguriert sind, dass sie die Befestigung der Massagevorrichtung (20) ermöglichen, eine zweite Vielzahl von Öffnungen (42) an dem oberen Teil (151A) und eine dritte Vielzahl von Öffnungen (43) an dem unteren Teil (151B), wobei die zweite Vielzahl von Öffnungen (42) und die dritte Vielzahl von Öffnungen (43) so konfiguriert sind, dass sie die Zirkulation des von der Belüftungsvorrichtung (30) erzeugten Luftstroms ermöglichen, wobei die Öffnungen der dritten Vielzahl von Öffnungen Öffnungen (43) mit einer Öffnungsfläche, die wesentlich größer ist als die Öffnungsfläche der Öffnungen der zweiten Vielzahl von Öffnungen (42), und
- die zweite Matratze (152) umfasst eine vierte Mehrzahl von Öffnungen (44), die nur im Umfangsabschnitt (152B) der Sitzfläche (12) des Sitzes (10) positioniert sind.

2. Sitz (10) nach dem vorhergehenden Anspruch, wobei die Massagevorrichtung (20) Massageelemente umfasst, wobei die erste Matratze (151) eine fünfte Vielzahl von Öffnungen (45) umfasst, die konfiguriert sind, um den Durchgang der Massageelemente zu ermöglichen.

3. Sitz (10) nach einem der vorhergehenden Ansprüche, wobei der untere Abschnitt (151B) der ersten Polsterung (151) eine Dicke aufweist, die größer ist als die Dicke des oberen Abschnitts (151A) der ersten Polsterung (151).

4. Sitz (10) nach einem der vorhergehenden Ansprüche, wobei der obere Abschnitt (151A) der ersten Polsterung (151) eine Dicke von 40 mm oder mehr aufweist.

5. Sitz (10) nach einem der vorhergehenden Ansprüche, wobei der untere Abschnitt (151B) der ersten Polsterung (151) einen unteren Abschnitt aufweist, wobei der untere Abschnitt des unteren Abschnitts (151B) der ersten Polsterung (151) eine Dicke von 60 mm oder mehr aufweist.

6. Sitz (10) nach einem der vorhergehenden Ansprüche, bei dem die zweite Matratze (152) eine Dicke von 75 mm oder mehr aufweist.

7. Sitz (10) nach einem der vorhergehenden Ansprüche, bei dem die Belüftungseinrichtung (30) eine vorbestimmte Luftströmungsrate erzeugt, wobei die zweite Vielzahl von Öffnungen (42), die dritte Vielzahl von Öffnungen (43) und die vierte Vielzahl von Öffnungen (44) eine globale Öffnungsfläche aufweisen, wobei die globale Öffnungsfläche so konfiguriert ist, dass sie den Durchgang der gesamten vorbestimmten Luftströmungsrate ermöglicht.

8. Sitz (10) nach einem der vorhergehenden Ansprüche, bei dem die Dichtung (15) einen mittels einer Form hergestellten Schaumstoff umfasst, wobei der Schaumstoff eine Verbindungsebene aufweist, die sich in der Mitte der Dicke der Dichtung (15) befindet.

9. Kraftfahrzeug (1) mit einem Sitz (10) nach einem der Ansprüche 1 bis 8.

## Claims

1. Seat (10) for a vehicle, in particular a motor vehicle (1), comprising a lining (15) , said seat (10) comprising a back (11) and a seat (12) and integrating a massage device (20) and a ventilation device (30), said ventilation device (30) being configured to generate an air flow, said lining (15) comprising a first padding (151) of said back (11) and a second padding (152) of said seat (12), said first padding (15) 1) comprising a lower part (151B) and an upper part (151A), said second padding (152) comprising a central portion (152A) and a peripheral portion (152B), the seat (10) being **characterized in that**:
- said first padding (151) comprises a first plurality of orifices (41), configured to allow the fixing of said massage device (20), a second plurality of orifices (42) on said upper part (151A) and a third plurality of orifices (43) on said lower part (151B), said second plurality of orifices (42) and said third plurality of orifices (43) being configured to allow the circulation of said air flow generated by the ventilation device (30), said orifices of said third plurality of orifices (43) having an opening area strictly greater than the opening area of said orifices of the second plurality of orifices (42), and
- said second padding (152) comprises a fourth plurality of orifices (44), positioned only at the peripheral portion (152 B) of the seat (12) of the seat (10).

2. Seat (10) according to the preceding claim, in which, the said massage device (20) comprising massage elements, the said first padding (151) comprises a fifth plurality of orifices (45), configured to allow the passage of the said massage elements.

3. Seat (10) according to one of the preceding claims, in which the said lower part (151B) of the first padding (151) has a thickness greater than the thickness of the said upper part (151A) of the first padding (151).

4. Seat (10) according to one of the preceding claims, in which the said upper part (151A) of the first padding (151) has a thickness greater than or equal to 40 mm.

5. Seat (10) according to one of the preceding claims, in which the said lower part (151B) of the first padding (151) comprises a lower portion, the said lower portion of the lower part (151B) of the first padding (151) has a thickness greater than or equal to 60 mm.

6. Seat (10) according to one of the preceding claims, in which the said second padding (152) has a thickness greater than or equal to 75 mm.

7. Seat (10) according to one of the preceding claims, in which, the ventilation device (30) generating a predetermined flow of air, the second plurality of orifices (42), the third plurality of orifices (43) and the fourth plurality of orifices (44) having an overall opening surface, the said overall opening surface is configured to allow the passage of the whole of the said predetermined flow of air.

8. Seat (10) according to one of the preceding claims, the lining (15) of which comprises an expanded foam produced by means of a mold, the said expanded foam having a joining plane situated at the mid-thickness of the lining (15).

9. Motor vehicle (1) comprising a seat (10) according to one of claims 1 to 8.
